# EUROPEAN PATENT SPECIFICATION

(11) **EP 3 073 142 B1**
(45) Date of publication and mention of the grant of the patent: **18.12.2019**
(21) Application number: 15160446.9
(22) Date of filing: 24.03.2015
(51) Int. Cl.: F16D 25/08, F16D 13/75

(54) **APPARATUS FOR ADJUSTING AN ACTUATOR TO COMPENSATE FOR WEAR MODIFICATIONS**
VORRICHTUNG ZUR ANPASSUNG EINES STELLGLIEDES ZUR KOMPENSATION VON ABNUTZUNGSMODIFIKATIONEN
APPAREIL DE RÉGLAGE D'UN ACTIONNEUR POUR COMPENSER DES MODIFICATIONS LIÉES À L'USURE

(43) Date of publication of application: 28.09.2016
(73) Proprietor: KNORR-BREMSE Systeme für Nutzfahrzeuge GmbH, 80809 München (DE)
(72) Inventor: Balogh, Levente, 2310 Szigetszentmiklos (HU); Trencseni, Balazs, 1037 Budapest (HU); Németh, Huba, 1116 Budapest (HU)

(56) References cited:
- FR-A1- 2 971 309
- US-A- 4 653 272
- US-A- 4 735 298

## Description

The present invention relates to an apparatus for adjusting an actuator to compensate for wear and tear modifications and, in particular, to an apparatus providing an actuator with an unchanged initial position over wear of, for example, a clutch disc.

### Background

A clutch plays a significant role in vehicle driveline systems. It is used to transmit a torque in a controlled way by an actuator module that disengages and engages a pretensioned or pre-strained clutch mechanism. Over time there is a significant wear and tear of the clutch friction disc caused by the clutch operation that leads to a reduction of its thickness over time. This modification of the geometry leads to variable conditions of operation of the clutch actuator module. The initial position of the clutch module (e.g. the fully-engaged clutch) depends on the thickness of the disc and, therefore, should be adjusted in accordance with the clutch wear. Otherwise, the clutch would remain partly open and the required torque cannot be transmitted correctly. On the other hand, also the fully disengaged clutch will be modified by the wear and tear over the time. This modification is equal to the initial position of the fully engaged clutch plus a positional deviation (operation stroke).

As a consequence of this wear and tear, the performance of the actuator depends on the initial condition, and thus, may deteriorate if the initial condition of the actuator has shifted in order to keep the transferable torque level constant while the thickness of the clutch changes. The performance of the actuator may be specified by dynamic aspects (for example, how much time is needed from a fully engaged clutch to a fully disengaged clutch or vice-versa), accuracy aspects (for example, what is the extent of deviation between a required and an achieved position of the release bearing or linked parts), or by any other aspects.

In order to avoid changes of the initial conditions of the actuator, an additional adjustor may be applied between the force transferring element of the actuator and the release bearing of the clutch. EP 0 561 506 A1 discloses such a self-adjusting clutch actuator, wherein a hydraulic adjustment assembly is used for an axial adjustment. The hydraulic adjustment assembly uses two chambers, which are connected by a channel with a valve there-between such that the fluid passing from one chamber to the other chamber will modify the actuator length. WO 2012/119612 discloses a further conventional self-adjusting clutch actuator using a mechanical clutch adjustor, wherein a locked friction increases due to deformation caused by the actuation force. US4653272 discloses a fluid actuation device with compensation for wear, particularly for friction clutch mechanisms.

Although these solutions compensate for wear of friction elements in linear actuators such as clutches, these solutions are disadvantageous for the following reasons. The clutch actuator of WO 2012/119612 includes a mechanical device, where the locking against the adjustment is solved by an increased friction, which is generated by the deformation of the piston element. Since the friction is not well-defined, the robustness of this device is expected to be low. The conventional clutch actuator of EP 0 561 506 compensates the wear by changing the fluid volume. During actuation an interruption of the volume change is achieved by a valve element, which is normally closed. The operation of this valve is not very reliable and is, in particular, affected by the friction and the pressure differences. Moreover, sealing capabilities of the valve plays a major role in its operation.

Therefore, there is a need of providing an alternative solution for adjustments to compensate for wear and tear modifications within actuators.

### Summary of the Invention

The present invention solves the above-mentioned problems by providing an apparatus according to claim 1, a vehicle clutch according to claim 13 and a vehicle brake system according to claim 14. The dependent claims refer to specifically advantageous realizations of the subject matters of the independent claims.

The present invention relates to apparatus for adjusting an actuator to compensate for wear and tear modifications. The apparatus comprises: a linear actuator configured to perform, during normal operation, a linear actuation lasting for a time period, a preloading element for providing a preloading force, and a coupling element arranged to couple the linear actuator with the preloading element such that the linear actuation of said linear actuator deforms linearly (in longitudinal direction) the preloading element. The coupling element is configured to vary its length with a time constant which is multiple times longer than the time period while the linear actuator performs the actuation during normal operation.

The term time constant defines a parameter, which determines a velocity of speed in which the length of a coupling element changes. Hence, it is a measure of a variation of the length with the time, e.g. the change of the length in a given time period. For an ideal constellation, the length of the coupling element may stay constant during a normal actuation time. For example, a typical actuation may refer to an engagement or disengagement of a clutch for which a typical time period is needed (with certain fluctuations). Hence, according to the present invention, during this typical time period the coupling element should not change or should change its length only negligibly.

It should be understood, that the time period during which the coupling element changes its length should not last too long, because within a typical idle period between two actuations the coupling element should, according to the present invention, adjust its length in order to compensate for the wear and tear of the actuator. Hence, the typical rate with which the length of the coupling element changes with time has a lower limit defined by the normal actuation time of the actuator and has an upper limit defined by the average time between two subsequent actuations.

Therefore, in another embodiment, between subsequent linear actuations of the linear actuator the apparatus is in an idle state for an average duration and the coupling element may be configured to vary its length within the average duration of the idle state.

In yet another embodiment the apparatus may further comprise a housing with a cylindrically shaped cavity. The linear actuator may further comprise a plunger and the actuation of the linear actuator may involve a linear displacement of the plunger within the cylindrically shaped cavity.

In yet another embodiment the coupling element may comprise a first portion, a second portion, and a biasing element. The first portion may be a cylindrical portion with an opening to receive the second portion such that the first portion and the second portion are able to move relative to each other to change the length of the coupling element. The biasing element may be arranged between the first portion and the second portion to provide a repulsion force acting to enlarge the length of the coupling element.

In yet another embodiment the coupling element further comprises a first chamber, a second chamber, at least one passage connecting the first chamber with second chamber, and a fluid within the first chamber and/or the second chamber. The first chamber may be inside the cylindrical portion of the first portion and comprises a volume that changes upon changing the length the coupling member. The second chamber may be arranged at least partly outside the cylindrical portion of the first portion. The fluid and/or the at least one passage may be adapted to ensure that coupling member is able to vary its length with the time constant multiple times longer than a time constant for the actuation the linear actuator.

In yet another embodiment the cross-sectional area of the at least one passage and/or a viscosity of the fluid may be selected to ensure the time constant of variation of the length of the coupling member being multiple times longer than a time constant for the actuation the linear actuator. This condition can also be formulated as a condition for the typical velocities with which the elements move during the time and as it will be defined in detail below.

In yet another embodiment the second chamber may be bounded by a flexible wall and at least part of the second portion. The flexible wall may extend between the cylindrical portion of the first portion and the linear actuator to define a volume of the second chamber that varies upon moving the first portion and second portion relative to each other.

The flexible wall as defined here, may also be an elastic wall to provide a certain amount of pressure on the fluid within the second chamber. This pressure on the fluid will contribute to the force with which the coupling element is pre-strained to extend its length in order to adjust for the wear and tear modifications of the actuator.

In yet another embodiment the second portion may have a cylindrical tube like shape with a closure and a plunger to define an internal cavity. The plunger may be biased by the biasing means enabling a variable volume for the second chamber. The closure may comprise the at least one passage connecting the first chamber within the first portion with the second chamber within the second portion.

In yet another embodiment the apparatus may further comprise a first bellow inside the first portion and a second bellow. The second portion may have a cylindrical shape with a closure to define an internal cavity that includes the second bellow. The closure may comprise the at least one passage. The first bellow and the second bellow may be connected by the at least one passage through the closure. The first portion may further comprise an abutment portion arranged at an end surface towards the preloading element, wherein the biasing means may be interposed between the abutment portion and a protrusion of the housing such that the biasing force acts towards an increased length of the coupling element.

In yet another embodiment the coupling element may be configured to vary its length from a minimum to a maximum length, wherein the minimum and maximum length may be selected such that variations in the length of the coupling element are able to compensate for wear and tear modifications of the actuator.

In yet another embodiment the linear actuator is operated by a pressure generated by an actuator fluid and/or by a spring element and/or by an electromagnetic field.

The present invention relates also to an actuator with an apparatus as described before with an electromagnetic actuation means configured to provide a linear force to actuate the linear actuator.

The present invention relates also to a vehicle clutch with at least one clutch disc and an apparatus as described before that couples to the at least one clutch disc and is configured to compensate for wear and tear modifications of the at least one clutch disc.

The present invention relates also to a vehicle brake system with at least one brake disc and an apparatus as described before that couples to the at least one brake disc and is configured to compensate for wear and tear modifications of the at least one brake disc.

### Brief Description of the Drawings

Various embodiments of the present invention will be described in the following by way of examples only, and with respect to the accompanying drawings, in which:
- Fig. 1: depicts an apparatus according to an embodiment of the present invention.
- Fig. 2: depicts an embodiment for a hydraulic adjustment for the coupling member.
- Fig. 3: depicts further aspects of the embodiment of Fig. 2.
- Fig. 4: illustrates the compensation of wear and tear according to the present invention.
- Fig. 5: depicts another embodiment for the coupling member according to the present invention.
- Figs. 6a, b: illustrate further embodiments for the coupling member.
- Fig. 7: depicts another embodiment based on an electromechanical actuator.

### Detailed Description

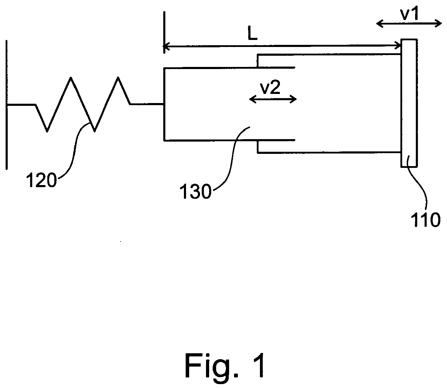

Fig. 1 depicts an apparatus for adjusting an actuator to compensate for wear and tear modifications according to an embodiment of the present invention. The apparatus comprises a linear actuator 110 configured to perform, during normal operation, a linear actuation lasting for a time period (defined, e.g., as an average or a typical time period). The apparatus further comprises a preloading element 120 for providing a preloading force. The apparatus further comprises a coupling element 130 with a length L arranged to couple the linear actuator 110 with the preloading element 120 such that the linear actuation of said linear actuator 110 deforms linearly the preloading element 120 (e.g. in longitudinal direction). The coupling element 130 is configured to vary its length L with a time constant, which is multiple times longer than the time period while the linear actuator 110 performs the actuation during normal operation. This condition should hold even though the amount correction due to wear and tear, as provided by the present invention, is in comparison to the normal actuation amount very small.

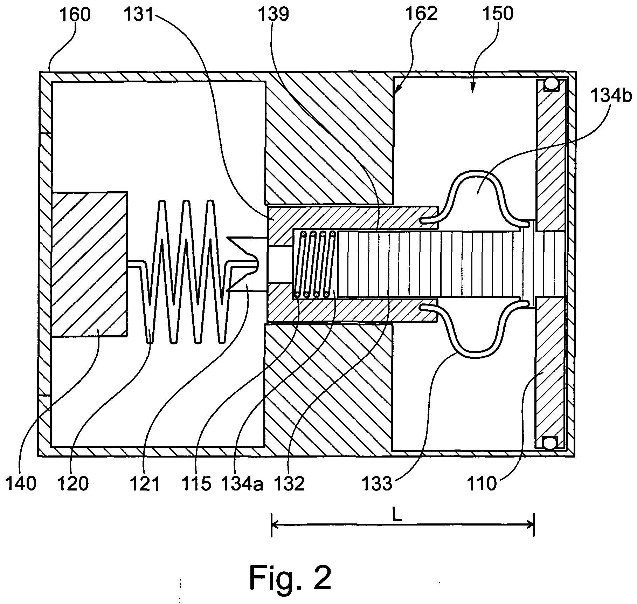

Fig. 2 depicts an embodiment, wherein the linear actuator 110 is provided in a cavity 150 of a housing 160. The cavity 150 may, for example, be a cylindrically shaped cavity within a cylindrical housing 160. In this embodiment the linear actuator 110 may be operated with a fluid or by air to move the linear actuator 110 as plunger within the cavity forward and backward. In addition, the coupling member 130 comprises a first portion 131, a second portion 132, a first chamber 134a, a second chamber 134b, and a biasing element 115. The first portion 131 may comprise a cylindrical shape, which is guided by a protrusion 162 of the housing 160. The second portion 132 is inserted in the cylindrically shaped first portion 131 such that it can move axially forward and backward. Between a bottom portion of the first portion 131 and the second portion 132 the first chamber 134a is formed.

Between the second portion 132 and the cylindrically formed first portion 131 a gap or passage 139 is provided, which connects the first chamber 134a with the second chamber 134b, which is provided between the first portion 131 and the linear actuator 110 around a circumferential direction of the second portion 132. The second chamber 134b, which is bounded by the second portion 132 and an elastic wall 133 is connected between the first portion 131 and the linear actuator 110 (or a portion attached to the linear actuator) and provides a variable volume for the second chamber 134b.

The variable volume of the second chamber 134b increases and decreases based upon a linear motion of the second portion 132 moving in the cylindrically shaped first portion 131 (like a plunger). Moreover, within the first chamber 134a, the biasing means 115 provides a biasing force between the first portion 131 and the second portion 132 acting to enlarge the length L of the coupling member 130.

Moreover, in the embodiment of Fig. 2 within the first chamber 134a and the second chamber 134b a fluid is provided, which can move between both chambers. However, the clearance or passage 139 between the second portion 132 and the cylindrically-shaped first portion 131 is dimensioned such that the fluid, when flowing between the first chamber 134a and the second chamber 134b, limits the linear movement to enlarge the length L of the coupling member 130. As a result, the coupling member 130 can extend to a larger length L only with a maximum velocity v2, which depends on the diameter of the passage 139, and, in addition, on the viscosity of the fluid that hinders the fluid when flowing through the passage 139 between the first chamber 134a and the second chamber 134b.

In addition, the housing 160 accommodates also the preloading element 120, which extends between an attachment portion 121 at the first portion 131 and a connection part 140. The connection part 140 may be connected, for example, to a clutch or any other actuator, which is subject to the wear and tear. Therefore, as consequence of the wear and tear, the connection portion 140 will decrease its size and thus, with time, the distance between the connection part 140 and the linear actuator 110 will increase. This increased distance will be compensated for by the coupling member 130, which adjusts its length L in correspondence with the increased distance between the connection part 140 and the linear actuator 110.

However, according to the present invention, the velocity v2 with which the coupling element 130 can adjust its length L in response to a decreased width of the connection part 140 is much smaller than a typical velocity v1 of the linear actuator 110 when moving within the cavity 150 during normal operation. For example, a normal operation can be an engagement or a disengagement of a clutch or any other operating means, which typically lasts for a period of time. As set out before, according to the present invention, the cross-sectional area of the passage 139 and/or the viscosity of the fluid in the first chamber and/or in the second chamber is such that the velocities obey the relation v2<<v1.

As a consequence, during normal operation, the length L of the coupling member 130 will (ideally) remain constant and will adjust only over a longer period in time by moving the fluid from the second chamber 134b to the first chamber 134a. This motion is driven i.a. by the biasing force of the biasing element 115 that in this embodiment is arranged within the first chamber 134a. This movement continues until a balance of forces is obtained, i.e. a balance between for the preloading element 120 providing a force between the connection part 140 and the coupling element 130 (which expels these components from each other), the biasing force of the biasing element 115 which again acts to separate the first portion 131 and the second portion 132 to enlarge the length L of the coupling element 130 and, finally, the elastic wall 133, again providing a pressure acting on the fluid within the second chamber 134b to drive an enlargement of the length L.

Optionally, the preloading element 120 can be a compression spring, which is preloaded in order to provide a repulsion force between the connection portion 140 and the attachment part 121 coupled to the first portion 131. Likewise, the biasing element 115 may also be a compression spring, which provides a repulsion force between the first portion 131 and the second portion 132 to increase the length of the coupling member 130.

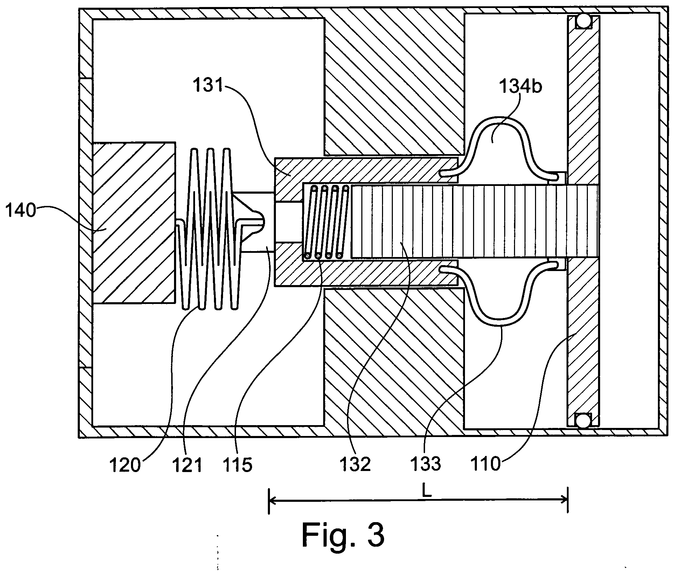

Fig. 3 illustrates further the operation of the apparatus as shown in Fig. 2. All components of the embodiment shown in Fig. 3 are equivalent to the components shown in Fig. 2. The difference in Fig. 3 is only that the linear actuator 110 has moved axially forward indicating the actuation of the linear actuator 110. This motion is provided with the actuator velocity v1, which, as said before, is larger than a velocity v2 with which the coupling element 130 can increase its length L. Therefore, during the motion of the linear actuator 110 as shown in Fig. 3 (compared with Fig. 2), the length L of the coupling element 130 between the attachment part 121 and the linear actuator 110 remains constant and the preloading element 120 is further pushed together. This increases the force acting on the connection part 140 and thus provides a force to an external actuator, which is actuated by this process. As said before, the passage 139 between the first portion 131 and the second portion 132 in combination with the viscosity of the fluid within the first chamber 134a and the second chamber 134b, is selected appropriately. This means for the state in Fig. 3 that within the time period, where the linear actuator 110 moves from the position of Fig. 2 to the position of Fig. 3, the second portion 132 is unable to move deeper into the first portion 131 (or only by an amount which is negligible for the operation of this device), because in this time period only a negligible amount of fluid is able to pass the passage 139.

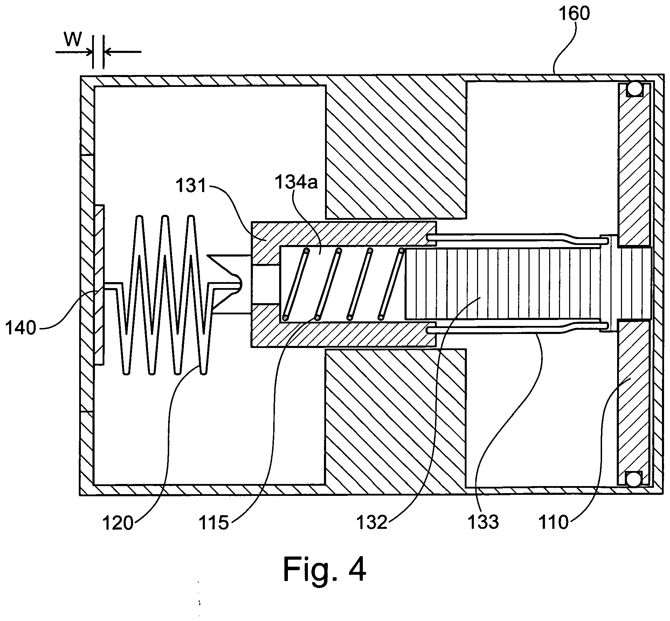

Fig. 4 relates to the embodiment as depicted in Figs. 2 and 3. However, Fig. 4 shows the situation, where the connection part 140 comprises a decreased width w, thereby increasing the distance between the connection part 140 and the linear actuator 110. The connection part 140 may, for example, extend to the outside of the housing 160 so that, as a consequence of the wear and tear, the connection part 140 does not extend so far inside the housing 160 as, for example, shown in Figs. 2 and 3. It should be understood that the connection part 140 does not itself need to become smaller over the time of operation, but modification occur to the external actuator (e.g. a clutch; not shown) that let appear the connection part 140 to be smaller.

Since now the distance between the connection part 140 and the actuator 110 in the state of no engagement or no operation of the linear actuator 110 is enlarged, the forces provided by the pre-loading element 120 and the biasing means 115 will again balance each other. During this adaption process the first portion 131 will move, when compared to the embodiment shown in Fig. 2, further towards the connection part 140. This avoids the situation, where the preloading element 120 is fully extended and thus could provide only less compression force. As shown in Fig. 4, the increase in the length L of the coupling element 130 is driven by the biasing force of the spring 115 to move the second portion 132 out of the first portion 131 by lowering the volume of the second chamber 134b between the elastic wall 133 and the second portion 132.

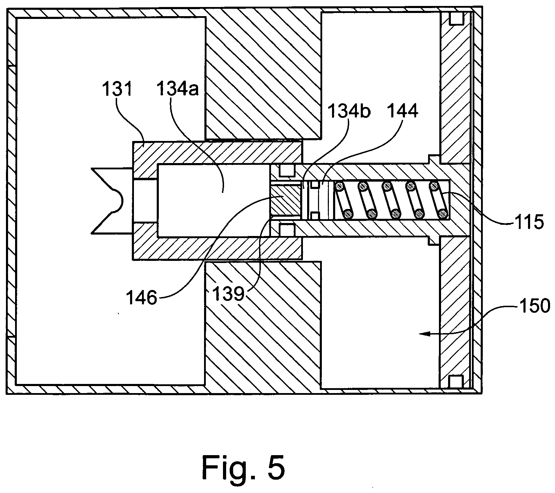

Fig. 5 depicts another embodiment for the coupling member 130, wherein the preloading element 120 and the connection part 140 are not shown. The embodiment of Fig. 5 again comprises a linear actuator 110, which moves axially within a housing 160 and Fig. 5 shows the state, where the linear actuator is not actuated. In comparison to the previous embodiments the second portion 132, the elastic wall 133 and the biasing means 115 are now replaced or arranged differently. Again, the embodiment of Fig. 5 comprises a first portion 131, which has a cylindrical shape. Within the cylindrically shaped first portion 131 the first chamber 134a is provided. The first chamber 134a is bounded by a piston type second portion 132. The piston-type second portion 132 also has a cylindrical shape such that it can move inside the first portion 131 and provides in its interior the second chamber 134b. The second chamber 134b is bounded by a lower wall 144, which is movable within the second portion 132 while being biased by a biasing means 115, thereby providing a pressure force acting to lower the volume of the second chamber 134b that is provided by the biasing element 115. In addition, the second portion 132 comprises a closure or separation wall 146 with one or more passages 139, wherein the passages 139 connect the first chamber 134a within the first portion 131 and the second chamber 134b within the second portion 132.

As for the previous embodiments, also in this embodiment the cross-sectional area of the passages 139 in combination with the viscosity of the fluid within the first chamber 134a and the second chamber 134b are chosen such that a velocity v2 with which the coupling element 130 can decrease its length L is much smaller than a typical velocity v1 with which the linear actuator 110 is moved within the housing 160 (or the cavity 150). In this embodiment, the second portion 132 should have a sealing connection with the first portion 131 (and not a clearance as in the embodiment of Fig. 2) to ensure that the fluid within the first chamber 134a can only move into the second chamber 134b through the passages 139, but not in the cavity 150.

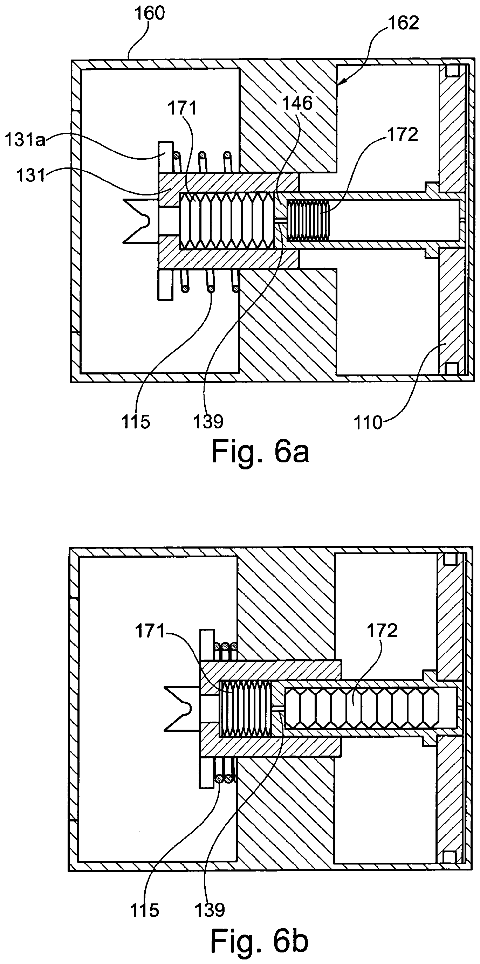

Figs. 6a and 6b illustrate yet another embodiment, which differs from the embodiment shown in Fig. 5 in that, the first chamber 134a is provided within a first bellow 171 arranged within the first portion 131. Similarly, the second chamber 134b is provided within a second bellow 172 provided within the cylindrically shaped second portion 132. The first bellow 171 and the second bellow 172 are connected via the passage 139 which again is provided in the separation wall 146 between the second portion 132 and the first portion 131. The separation wall 146 represents a closure for the second portion 132.

In this embodiment, the biasing means 115 is arranged between the first portion 131 and a protrusion 162 extending from the housing 160. For example, the first portion 131 may comprise an abutment portion 131a which provides an abutment for the biasing means 115 such that the biasing means 115 provides a repulsion force pushing the first portion 131 away from the linear actuator 110, thus acting in the same way as the biasing means in the embodiments shown in Figs. 2 and 5.

Fig. 6b shows the same embodiment as of Fig. 6a, but in the state, where the biasing means 115 is fully compressed, thereby pushing the fluid out of the first bellow 171 through the passage 139 into the second bellow 172 which provides the second chamber 134b.

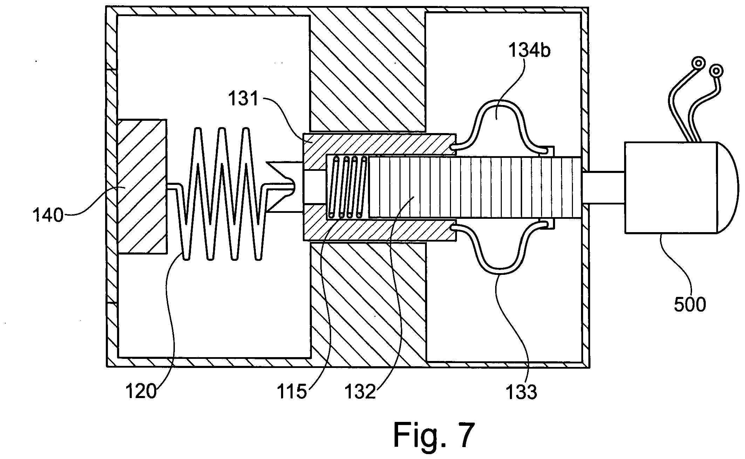

Fig. 7 shows another embodiment, wherein the components of the apparatus are the same as in the embodiment of Fig. 2. However, in the embodiment of Fig. 7, the linear actuator 110 is given by an electromagnet or an electromechanical component 500 which is able to move linearly the coupling member 130 in the direction forward the connection part 140, thereby providing the same function as the linear actuator 110 described with the embodiment of Figs. 2 and 3. The actuator 500 may be connected to a control unit which is configured to provide a control signal thereby actuating the actuator 500 and providing the respective force, for example, for engaging or disengaging the exemplary clutch or brake system.

Advantageous aspects of the various embodiments can be summarized as follows:
Embodiments of the present invention aim to eliminate the disadvantages of the conventional adjusting clutch actuators using a fluid and walls. The compensation of wear according to embodiments is made possible not only for a clutch mechanism, but also for any other actuator device (e.g. between the release bearing and a transmitter of the longitudinal force of the actuator). According to the present invention the actuator operates in the same operational interval, even when the clutch is subject to wear.

Embodiments are characterized by utilizing the effect that a high viscosity of the fluid limits the flow over the limited gap, even at high compression force. The viscous fluid needs time to leave the internal chambers and this time is not available during the clutch actuations. On the other hand, this time is available in a fully engaged state of the clutch, when a slight decompression force is present and has to be compensated.

The linear actuator of Fig. 2 is operated by compressed air, for example, through a main piston 110 against an elastic element 120 which could be a spring of the transmission clutch of the vehicle or a brake caliper or any other vehicle component. The operation results in a wear and tear in a friction element and was related to variations in the width (or thickness) of the coupling part 140. These elements are pre-stressed by the actuator 110. The adjusting device according to embodiments is formed between the elastic element 120 and the actuator piston 110 in order to compensate for a size change of the friction element 140 caused by the wear. The adjustor comprises an inner piston (the second portion 132), which is guided in a chamber (the first portion 131) filled out by a fluid (not shown in the Figure). Due to the tolerances or intended design diameter differences of the clearance 139 of the inner piston 132 and the chamber 131, the fluid is able to flow into the additional variable volume, which is closed by an elastic wall 133. In accordance with this structure, the desired volume change in the chamber 131 for the wear is compensated by the fluid flow from the additional volume of the chamber 131 through the small channel 139 formed by the inner piston 132 and the chamber tolerances. The static position of the adjustor is defined by a force balance of the elastic element 120, the force of the elastic wall 133 and a force exerted by a further elastic element (the biasing element 115) between the piston 132 and the chamber 131.

In case the size of the friction element 140 decreases, the force of the elastic element 120 will decrease causing a change in the force balance. The unbalanced forces will generate a movement driven by the force of the elastic wall 133 and the additional elastic element 115 moving the chamber 131 in the direction of the friction element 140 until the forces are balanced again. In parallel hereto, the fluid flow compensates the volume change inside the chamber 131. This procedure provides an adjustment of the system reacting on the wear.

However, during operation of the actuator by the main piston 110, the inner piston 132 will increase the pressure in the chamber 131 implying a fluid flow out of the chamber 131. However, in this operational state a volume change in the chamber 131 is intended to be avoided in order to provide the full actuation force against the elastic element 120. This flow was avoided by the correct design of the inner piston 132 and the chamber 131 diameter in relation to the viscosity of the fluid. Using a small gap between the inner piston 132 and the chamber 131 and a high viscosity, the amount of fluid flow will be low, even at high fluid pressure.

Usually, the operation of the actuator is less than 10% of the total life of the actuator. Therefore, significant fluid flow for adjustment is possible during idle phases, while the amount of fluid flow during operation is negligible. The reason for this is that the amount of the volume change of the chamber is the time integral of the fluid flow. Therefore, in a short time, the volume change will be negligible compared to the volume change over longer time. The method is theoretically applicable in systems where the operation time is less than 50% of the total lifetime without specifying further parameters.

Fig. 5 showed another design using a piston instead of an elastic wall, wherein the additional volume was realized inside of an inner piston while the fluid flow was ensured by bores on the front surface of the inner piston. In this case, the chamber shall be sealed in the gap between the chamber and the inner piston. A further piston is formed inside the inner piston to allow an increase of the fluid flow inside the inner piston. The elastic wall and the additional elastic element were substituted by one single elastic element connected to the piston inside the inner piston setting up the force balance.

Fig. 6 showed yet another realization, where the fluid volumes were both closed by the elastic chambers having the bores a fluid connection in between. An additional elastic element, which is used to set the idle-pre-stress of the friction element, is placed between the chamber and the housing. This can be an alternative realization for all of the previous presented structures.

Fig. 7 showed yet another actuation principle, where the actuator is operated from an electromagnetic source (for example by an electromotor), instead of a pneumatic actuation. It is understood, that the adjustor concept is not restricted to any type of actuation principle.

Major aspects of the present invention provide, in particular, the following advantages:
The present invention aims to create and construct adjustor solutions which are as simple as possible in order to avoid the implementation of many large and heavy parts in the actuator system or between the actuator and the release bearing (included in clutch mechanisms). The present invention aims to create and construct adjustor solutions which are as simple as possible in order to avoid the implementation of many large and heavy parts in the actuator system or between the actuator and the release bearing (included in clutch mechanisms) without any wear, stress and friction sensitive control valve or relative motion parts. Specific aspects of the adjustors are the following:
- The expected stroke (= position deviation) that has to be compensated for due to disc wear is much smaller than the operational stroke of the clutch actuator (deviation between fully engaged and fully disengaged positions) in short time.
- The actuation of the clutch (disengagement or engagement) happens in a relatively short time period compared to the time period available to wear compensation. Wearing processes are much slower as compared to the clutch actuation process. The clutch in a motor vehicle is in general significantly longer engaged (i.e. not in the actuated state) than it is partly or fully disengaged (actuated state).

Further advantageous embodiments of the present invention relate to an adjustor device that is built in a linear actuator, which is operated against a first elastic element in less than 50% of the total time. The adjuster device may further contain a cylinder and piston parts including a first chamber filled with a fluid and having a fluid connection to a second chamber having a variable volume defined by a closure by a second elastic element. The adjustor device may further be configured to balance a force of the first and second elastic elements by moving said piston and by a fluid flow from the first chamber to the second chamber. The adjustor device may be characterized in that an effective cross-section of the fluid connection is designed in accordance with the viscosity of the fluid in order to slow down the balancing linear movement of the device to a negligible low value when the actuator is operated.

Another embodiments relates to an adjustor device, which is characterized in that the second elastic elements are integrated.

A further embodiment relates to an adjustor device, which is characterized in that the volume of the second chamber is changed by a spring-loaded piston or by an elastic wall of the chamber.

In a further embodiment the adjustor device is characterized in that an operation force of the linear actuator is applied to the piston.

In a further embodiment, the adjustor device is characterized in that the operation force of the linear actuator is generated by a fluid pressure and/or a spring element and/or an electromagnetic field.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### List of reference signs

- 110: linear actuator
- 115: biasing element
- 120: preloading element
- 130: coupling element
- 131: first portion
- 131a: abutment portion
- 132: second portion
- 134a, b: first and second chamber
- 139: at least one passage
- 144: plunger
- 146: closure
- 150: cavity
- 160: housing
- 162: protrusion of housing
- 500: actuator
- v1: first velocity
- v2: second velocity

## Claims

1. Apparatus for adjusting an actuator to compensate for wear and tear modifications, for example of a clutch disc or a brake disc, the apparatus comprising:
a linear actuator (110) configured to perform, during normal operation, a linear actuation lasting for a time period; and
a preloading element (120) for providing a preloading force;
**characterized by**
a coupling element (130) arranged to couple the linear actuator (110) with the preloading element (120) such that the linear actuation of said linear actuator (110) deforms linearly the preloading element (120),
wherein the coupling element (130) comprises a fluid-based adjustment assembly configured to vary its length (L) with a time constant which is multiple times longer than the time period for the linear actuation during normal operation.

2. The apparatus according to claim 1, wherein the linear actuator (110) is configured to perform subsequent linear actuations between which the apparatus is in an idle state for an average duration, and wherein the coupling element (130) is configured to vary its length (L) within the average duration of the idle state, where the average duration of the idle state is at least as long as the time period for the linear actuation of the linear actuator (110).

3. The apparatus according to claim 1 or claim 2, further comprising a housing (160) with a cylindrically shaped cavity (150), wherein the linear actuator (110) comprises a plunger and the actuation of the linear actuator involves a linear displacement of the plunger within the cylindrically shaped cavity (150).

4. The apparatus according to one of the preceding claims, wherein the coupling element (130) comprises a first portion (131), a second portion (132), and a biasing element (115),
the first portion (131) being a cylindrical portion with an opening to receive the second portion (132) such that the first portion (131) and the second portion (132) are able to move relative to each other to change the length (L) of the coupling element (130),
the biasing element (115) being arranged between the first portion (131) and the second portion (132) to provide a repulsion force acting to enlarge the length (L) of the coupling element (130).

5. The apparatus according to claim 4, wherein the coupling element (130) further comprises a first chamber (134a), a second chamber (134b), at least one passage (139) connecting the first chamber (134a) with second chamber (134b), and a fluid within the first chamber (134a) and/or the second chamber (134b),
the first chamber (134a) being inside the cylindrical portion of the first portion (131) and comprising a volume that changes upon changing the length the coupling member (130), the second chamber (134b) arranged at least partly outside the cylindrical portion of the first portion (131),
wherein the fluid and/or the at least one passage (139) are adapted to ensure that coupling member (130) is able to vary its length (L) with the time constant multiple times longer than a time constant for the actuation the linear actuator (110).

6. The apparatus according claim 5, wherein the cross-sectional area of the at least one passage (139) and/or a viscosity of the fluid is selected to ensure the time constant of variation of the length (L) of the coupling member (130) being multiple times longer than a time constant for the actuation the linear actuator (110).

7. The apparatus according to claim 5 or claim 6, the second chamber (134b) being bounded by a flexible wall (133) and at least part of the second portion (132), the flexible wall (133) extending between the cylindrical portion of the first portion (131) and the linear actuator (110) to define a volume of the second chamber (134b) that varies upon moving the first portion (131) and second portion (132) relative to each other.

8. The apparatus according to claim 5 or claim 6, wherein the second portion (132) has a cylindrical tube like shape with a closure (146) and a plunger (144) to define an internal cavity, the plunger (144) being biased by the biasing means (115) providing the second cavity (134b) with a variable volume,
wherein the closure (146) comprises the at least one passage (139) connecting the first cavity (134a) within the first portion (131) with the second cavity (134b) within the second portion (132).

9. The apparatus according to claim 5 or claim 6, further comprising a first bellow (171) inside the first portion (131) and a second bellow (172), the second portion (132) having a cylindrical shape with a closure (146) to define an internal cavity that includes the second bellow (172), the closure (146) comprising the at least one passage (139), the first bellow (171) and the second bellow (172) being connected by the at least one passage (139) through the closure (146),
the first portion (131) further comprising an abutment portion (131a) arranged at an end surface towards the preloading element (120), wherein the biasing means (115) is interposed between the abutment portion (131a) and a protrusion (162) of the housing (160) such that the biasing force acts towards an increased length (L) of the coupling element (130).

10. The apparatus according to one of the preceding claims, wherein the coupling element (130) is configured to vary its length (L) from a minimum to a maximum length and wherein the minimum and maximum length are selected such that variations in the length (L) of the coupling element (130) are able to compensate for wear and tear modifications of the actuator.

11. The apparatus according to one of the preceding claims, wherein the linear actuator (110) is operated by a pressure generated by an actuator fluid and/or by a spring element and/or by an electromagnetic field.

12. An actuator with an apparatus according to one of claims 1 to 11, with an electromagnetic actuation means configured to provide a linear force to actuate the linear actuator (110).

13. A vehicle clutch with at least one clutch disc and an apparatus according to one of the claims 1 to 11 that couples to the at least one clutch disc and is configured to compensate for wear and tear modifications of the at least one clutch disc.

14. A vehicle brake system with at least one brake disc and an apparatus according to one of the claims 1 to 11 that couples to the at least one brake disc and is configured to compensate for wear and tear modifications of the at least one brake disc.

## Patentansprüche

1. Vorrichtung zur Anpassung eines Stellgliedes zur Kompensation von Abnutzungsmodifikationen, zum Beispiel einer Kupplungsscheibe oder einer Bremsscheibe, wobei die Vorrichtung umfasst:
ein Linearstellglied (110), das im Normalbetrieb zur Ausführung einer Linearbetätigung über eine Zeitspanne ausgelegt ist; und
ein Vorspannungselement (120) zur Bereitstellung einer Vorspannungskraft;
**gekennzeichnet durch**
ein Koppelelement (130), das zum Koppeln des Linearstellgliedes (110) an das Vorspannungselement (120) ausgelegt ist, so dass die Linearbetätigung des besagten Linearstellgliedes (110) das Vorspannungselement (120) linear verformt,
wobei das Koppelelement (130) eine Einstellbaugruppe auf Fluidbasis umfasst, die zum Variieren seiner Länge (L) mit einer Zeitkonstante ausgelegt ist, die um ein Vielfaches länger ist als die Zeitspanne für die Linearbetätigung im Normalbetrieb.

2. Vorrichtung nach Anspruch 1, wobei das Linearstellglied (110) zur Ausführung von nachfolgenden Linearbetätigungen ausgelegt ist, zwischen denen die Vorrichtung für eine durchschnittliche Dauer in einem Ruhezustand ist, und wobei das Koppelelement (130) zum Variieren seiner Länge (L) innerhalb der durchschnittlichen Dauer des Ruhezustandes ausgelegt ist, wobei die durchschnittliche Dauer des Ruhezustandes mindestens so lang ist wie die Zeitspanne für die Linearbetätigung des Linearstellgliedes (110).

3. Vorrichtung nach Anspruch 1 oder 2, weiter umfassend ein Gehäuse (160) mit einem zylinderförmigen Hohlraum (150), wobei das Linearstellglied (110) einen Kolben umfasst und die Betätigung des Linearstellgliedes eine Linearverschiebung des Kolbens im zylinderförmigen Hohlraum (150) beinhaltet.

4. Vorrichtung nach einem der vorhergehenden Ansprüche, wobei das Koppelelement (130) eine erste Partie (131), eine zweite Partie (132) und ein Vorspannelement (115) umfasst.
wobei die erste Partie (131) eine zylinderförmige Partie mit einer Öffnung zur Aufnahme der zweiten Partie (132) ist, so dass die erste Partie (131) und die zweite Partie (132) sich im Verhältnis zueinander zur Änderung der Länge (L) des Koppelelements (130) bewegen können,
wobei das Vorspannelement (115) zur Bereitstellung einer Abstoßkraft zum Vergrößern der Länge (L) des Koppelelements (130) zwischen der ersten Partie (131) und der zweiten Partie (132) angeordnet ist.

5. Vorrichtung nach Anspruch 4, wobei das Koppelelement (130) weiter eine erste Kammer (134a) und eine zweite Kammer (134b), mindestens einen die erste Kammer (134a) mit der zweiten Kammer (134b) verbindenden Kanal (139) und ein Fluid innerhalb der ersten Kammer (134a) und/oder der zweiten Kammer (134b) umfasst,
wobei die erste Kammer (134a) innerhalb der zylinderförmigen Partie der ersten Partie (131) angeordnet ist und ein Volumen hat, das sich nach Ändern der Länge des Koppelelements (130) ändert, und wobei die zweite Kammer (134b) mindestens teilweise außerhalb der zylinderförmigen Partie der ersten Partie (131) angeordnet ist, wobei das Fluid und/oder der mindestens eine Kanal (139) dazu ausgelegt ist/sind, sicherzustellen, dass das Koppenelement (130) seine Länge (L) mit der Zeitkonstante variieren kann, die um ein Vielfaches länger ist als eine Zeitkonstante für die Betätigung des Linearstellgliedes (110).

6. Vorrichtung nach Anspruch 5, wobei die Querschnittsfläche des mindestens einen Kanals (139) und/oder eine Viskosität des Fluids so gewählt wird/werden, dass die Zeitkonstante des Variierens der Länge (L) des Koppelelements (130) um ein Vielfaches länger ist als eine Zeitkonstante für die Betätigung des Linearstellgliedes (110).

7. Vorrichtung nach Anspruch 5 oder 6, wobei die zweite Kammer (134b) von einer biegsamen Wand (133) und mindestens einem Teil der zweiten Partie (132) begrenzt ist, wobei sich die biegsame Wand (133) zur Begrenzung eines Volumens der zweiten Kammer (134b), das nach Bewegung der ersten Partie (131) relativ zur zweiten Partie (132) variiert, zwischen der zylinderförmigen Partie der ersten Partie (131) und dem Linearstellglied (110) erstreckt.

8. Vorrichtung nach Anspruch 5 oder 6, wobei die zweite Partie (132) eine Zylinderrohrform mit einem Verschluss (146) und einem Kolben (144) zur Begrenzung eines inneren Hohlraums hat, wobei der Kolben (144) vom Vorspannmittel (115) zur Bereitstellung eines variablem Volumens für den zweiten Hohlraum (134b) vorgespannt wird,
wobei der Verschluss (146) den mindestens einen Kanal (139) umfasst, der den ersten Hohlraum (134a) innerhalb der ersten Partie (131) mit dem zweiten Hohlraum (134b) innerhalb der zweiten Partie (132) verbindet.

9. Vorrichtung nach Anspruch 5 oder 6, weiter umfassend einen ersten Faltenbalg (171) innerhalb der ersten Partie (131) und einen zweiten Faltenbalg (172), wobei die zweite Partie (132) eine Zylinderform mit einem Verschluss (146) zur Begrenzung eines inneren Hohlraums aufweist, der den zweiten Faltenbalg (172), den Verschluss (146) mit dem mindestens einen Kanal (139), den ersten Faltenbalg (171) und den durch den mindestens einen Kanal (139) durch den Verschluss (146) verbundenen zweiten Faltenbalg (172) beinhaltet,
wobei die erste Partie (131) weiter eine Widerlagerpartie (131a) umfasst, die an einer Stirnfläche gegenüber dem Vorspannungselement (129) angeordnet ist, wobei das Vorspannmittel (115) zwischen der Widerlagerpartie (131a) und einem Vorsprung (162) des Gehäuses (160) so angeordnet ist, dass die Vorspannkraft in Richtung einer größeren Länge (L) des Koppelelements (130) wirkt.

10. Vorrichtung nach einem der vorhergehenden Ansprüche, wobei das Koppelelement (130) zum Variieren seiner Länge (L) zwischen einer Mindest- und einer Höchstlänge ausgelegt ist, und wobei die Mindest- und die Höchstlänge so gewählt werden, dass Variationen in der Längfe (L) des Koppelelements (130) Abnutzungsmodifikationen des Stellgliedes ausgleichen können.

11. Vorrichtung nach einem der vorhergehenden Ansprüche, wobei das Linearstellglied (110) von einem Druck betätigt wird, der von einem Stellgliedfluid und/oder einem Federelement und/oder einem elektromagnetischen Feld erzeugt wird.

12. Stellglied mit einer Vorrichtung nach einem der Ansprüche 1 bis 11, mit einem elektromagnetischen Betätigungsmittel, das zur Bereitstellung einer Linearkraft zur Betätigung des Linearstellgliedes (110) ausgelegt ist.

13. Fahrzeugkupplung mit mindestens einer Kupplungsscheibe und einer Vorrichtung nach einem der Ansprüche 1 bis 11, die an die mindestens eine Kupplungsscheibe koppelt und zur Kompensation von Abnutzungsmodifikationen der mindestens einen Kupplungsscheibe ausgelegt ist.

14. Fahrzeugbremsanlage mit mindestens einer Bremsscheibe und einer Vorrichtung nach einem der Ansprüche 1 bis 11, die an die mindestens eine Bremsscheibe koppelt und zur Kompensation von Abnutzungsmodifikationen der mindestens einen Bremsscheibe ausgelegt ist.

## Revendications

1. Dispositif de réglage d'un actionneur, afin de compenser des modifications dues à l'usure et à l'arrachement, par exemple d'un disque d'embrayage ou d'un disque de frein,
le dispositif comprenant :
un actionneur (110) linéaire, configuré pour effectuer, pendant le fonctionnement normal, un actionnement linéaire durant pendant une durée ; et
un élément (120) de préchargement pour fournir une force de préchargement ;
**caractérisé par**
un élément (130) de couplage, disposé de manière à coupler l'actionneur (110) linéaire à l'élément (120) de préchargement, de manière à ce que l'actionnement linéaire de l'actionneur (110) linéaire déforme linéairement l'élément (120) de préchargement,
dans lequel l'élément (130) de couplage comprend un ensemble de réglage à base de fluide, configuré pour que sa longueur (L) varie avec une constante de temps, qui est plusieurs fois plus longue que la durée de l'actionnement linéaire pendant le fonctionnement normal.

2. Dispositif suivant la revendication 1, dans lequel l'actionneur (110) linéaire est configuré pour effectuer les actionnements linéaires subséquents entre lesquels le dispositif est dans un état d'attente pendant une durée moyenne, et dans lequel l'élément (130) de couplage est configuré pour que sa longueur (L) varie dans la durée moyenne de l'état d'attente, la durée moyenne de l'état d'attente étant au moins aussi longue que la durée de l'actionnement linéaire de l'actionneur (110) linéaire.

3. Dispositif suivant la revendication 1 ou la revendication 2, comprenant, en outre, un boîtier (160) ayant une cavité (150) conformée cylindriquement, l'actionneur (110) linéaire comprenant un plongeur et l'actionnement de l'actionneur linéaire impliquant un déplacement linéaire du plongeur dans la cavité (150) conformée cylindriquement.

4. Dispositif suivant l'une des revendications précédentes, dans lequel l'élément (130) de couplage comprend une première partie (131), une deuxième partie (132) et un élément (115) de sollicitation,
la première partie (131) étant une partie cylindrique ayant une ouverture pour recevoir la deuxième partie (132), de manière à ce que la première partie (131) et la deuxième partie (132) puissent se déplacer l'une par rapport à l'autre pour changer la longueur (L) de l'élément (130) de couplage, l'élément (115) de sollicitation étant disposé entre la première partie (131) et la deuxième partie (132) pour fournir une force de répulsion agissant pour augmenter la longueur (L) de l'élément (130) de couplage.

5. Dispositif suivant la revendication 4, dans lequel l'élément (130) de couplage comprend, en outre, une première chambre (134a), une deuxième chambre (134b), au moins un passage (139) mettant la première chambre (34a) en communication avec la deuxième chambre (134b) et un fluide dans la première chambre (134a) et/ou dans la deuxième chambre (134b),
la première chambre (134a) étant à l'intérieur de la partie cylindrique de la première partie (131) et comprenant un volume, qui change par changement de la longueur de l'élément (130) de couplage, la deuxième chambre (134b) étant disposée, au moins en partie, à l'extérieur de la partie cylindrique de la première partie (131),
le fluide et/ou le au moins un passage (139) étant conçu pour assurer que l'élément (130) de couplage puisse varier en longueur (L) avec la constante de temps plusieurs fois plus longue qu'une constante de temps de l'actionnement de l'actionneur (110) linéaire.

6. Dispositif suivant la revendication 5, dans lequel la surface transversale du au moins un passage (139) et/ou une viscosité du fluide est choisi pour assurer que la constante de temps de la variation de la longueur (L) de l'élément (130) de couplage soit plusieurs fois plus longue qu'une constante de temps de l'actionnement de l'actionneur (110) linéaire.

7. Dispositif suivant la revendication 5 ou la revendication 6, la deuxième chambre (134b) étant délimitée par une paroi (133) souple et par au moins une partie de la deuxième partie (132), la paroi (133) souple s'étendant entre la partie cylindrique de la première partie (131) et l'actionneur (110) linéaire pour définir un volume de la deuxième chambre (134b), qui varie par déplacement de la première partie (131) et de la deuxième partie (132) l'une par rapport à l'autre.

8. Dispositif suivant la revendication 5 ou la revendication 6, dans lequel la deuxième partie (132) a une forme analogue à un tube cylindrique avec une fermeture (146) et un plongeur (144) pour définir une cavité intérieure, le plongeur (144) étant sollicité par les moyens (115) de sollicitation procurant la deuxième cavité (134b) de volume variable,
la fermeture (146) comprenant le au moins un passage (139) mettant la première cavité (134a) dans la première partie (131) en communication avec la deuxième cavité (134b) dans la deuxième partie (132).

9. Dispositif suivant la revendication 5 ou la revendication 6, comprenant, en outre, un premier soufflet (17) à l'intérieur de la première partie (131) et un deuxième soufflet (172), la deuxième partie (132) ayant une forme cylindrique avec une fermeture (146) pour définir une cavité intérieure, qui inclut le deuxième soufflet (172), la fermeture (146) comprenant le au moins un passage (139), le premier soufflet (171) et le deuxième soufflet (172) communiquant par le au moins un passage (139) à travers la fermeture (146),
la première partie (131) comprenant, en outre, une partie (131a) de butée, disposée à une surface d'extrémité vers l'élément (120) de préchargement le moyen (115) de sollicitation étant interposé entre la partie (131a) de butée et une saillie (162) du boîtier (160), de manière à ce que la force de sollicitation agisse en vue d'une longueur (L) accrue de l'élément (130) de couplage.

10. Dispositif suivant l'une des revendications précédentes, dans lequel l'élément (130) de couplage est configuré pour que sa longueur (L) varie d'une longueur minimum à une longueur maximum et dans lequel la longueur minimum et la longueur maximum sont choisies de manière à ce que des variations de longueur (L) de l'élément (130) de couplage puissent compenser des modifications dues à l'usure et à l'arrachement de l'actionneur.

11. Dispositif suivant l'une des revendications précédentes, dans lequel l'actionneur (10) linéaire est mis en fonctionnement par une pression produite par un fluide d'actionneur et/ou par un élément de ressort et/ou par un champ électromagnétique.

12. Actionneur ayant un dispositif suivant l'une des revendications 1 à 11, comprenant des moyens d'actionnement électromagnétiques configurés pour donner une force linéaire, afin d'actionner l'actionneur (110) linéaire.

13. Embrayage de véhicule ayant au moins un disque d'embrayage et un dispositif suivant l'une des revendications 1 à 11, qui se couple au au moins un disque de frein et qui est configuré pour compenser des modifications dues à l'usure et à l'arrachement du au moins un disque d'embrayage.

14. Système de frein de véhicule ayant au moins un disque de frein et un dispositif suivant l'une des revendications 1 à 11, qui se couple au au moins un disque de frein et qui est configuré pour compenser des modifications dues à l'usure et à l'arrachement du au moins un disque de frein.
